# FASCICULE DE BREVET EUROPEEN

(11) **EP 1 252 206 B1**
(45) Date de publication et mention de la délivrance du brevet: **07.01.2004**
(21) Numéro de dépôt: 01907645.4
(22) Date de dépôt: 19.01.2001
(51) Int. Cl.: C08F 220/34, C08F 220/60, C08F 2/28

(54) **DISPERSIONS AQUEUSES SALINES DE COPOLYMERES HYDROSOLUBLES A BASE DE MONOMERES CATIONIQUES, LEUR PROCEDE DE FABRICATION ET LEURS APPLICATIONS**
WÄSSRIGE SALZDISPERSIONEN VON WASSERLÖSLICHEN (CO)POLYMEREN AUF BASIS VAN KATIONISCHEN MONOMEREN, IHR HERSTELLUNGSVERFAHREN UND IHRE VERWENDUNG
WATER SOLUBLE SALINE AQUEOUS DISPERSIONS OF COPOLYMERS BASED ON CATIONIC MONOMERS, METHOD FOR MAKING SAME AND USES THEREOF

(30) Priorité: 24.01.2000 FR 0000835
(43) Date de publication de la demande: 30.10.2002
(73) Titulaire: Atofina, 92800 Puteaux (FR)
(72) Inventeur: RIONDEL, Alain, F-57600 Forbach (FR); TEMBOU N'ZUDIE, Denis, F-27470 Serquigny (FR); LEGRAND, Yvon, F-62800 Lievin (FR); VANHOYE, Didier, F-60600 Breuil le Vert (FR)
(74) Mandataire: Rieux, Michel
(86) Numéro de dépôt international: PCT/FR2001/000181
(87) Numéro de publication internationale: WO 2001/055224

(56) Documents cités:
- EP-A- 0 915 107
- SOLOVSKII, M. V. ET AL.: "Synthesis and antimicrobial properties of mono and polymeric quaternary ammonium salts containing aminoalkyl esters of methacrylic acid" KHIM.-FARM. ZH. (1974), 8(6), 20-4, 1974, pages 348-349, XP000952593

## Description

La présente invention porte sur des dispersions aqueuses salines de nouveaux (co)polymères hydrosolubles à base de nouveaux monomères cationiques, sur la préparation de ces dispersions et sur leurs applications.

Parmi ces monomères cationiques, certains sont nouveaux, leur synthèse faisant l'objet d'une demande de brevet français déposée ce jour au nom de la Société déposante et ayant pour titre "Nouveaux monomères à groupes amino quaternaires, leur procédé de fabrication, et les nouveaux (co)polymères obtenus à partir de ces nouveaux monomères". Ce nouveau procédé de fabrication s'applique également à des monomères connus, conformément à une demande de brevet également déposée ce jour au nom de la Société déposante.

Ces nouveaux monomères cationiques permettent l'obtention de (co)polymères hydrosolubles, insolubles dans une solution aqueuse de sels minéraux, mais solubles par simple dilution à l'eau. Cette propriété des (co)polymères est ainsi mise à profit pour générer, par précipitation, en cours de polymérisation en milieu aqueux salin, des particules de (co)polymères qui sont stabilisées par un second (co)polymère, soluble quant à lui dans le milieu et qui joue le rôle de dispersant. Les dispersions aqueuses de (co) polymères hydrosolubles ainsi obtenues, qui font l'objet de la présente invention, sont utilisées dans diverses applications, lesquelles font également l'objet de la présente invention.

Les polymères hydrosolubles sont utilisés pour différentes applications et, en particulier, comme floculants pour le traitement des eaux urbaines, résiduaires et industrielles, la déshydratation des boues générées, comme épaississants et agents de traitement des sols. Il est bien connu que les systèmes aqueux de tels polymères hydrosolubles à haut extrait sec sont gélatineux et présentent des viscosités très élevées, qui rendent leur manipulation et leur stockage difficiles. Le problème posé à l'homme du métier est la réalisation de tels systèmes aqueux mais ayant à la fois un extrait sec élevé et une faible viscosité.

Les procédés conventionnels de synthèse de ces polymères comprennent la polymérisation en solution, en suspension inverse et en émulsion inverse. La polymérisation en solution et la polymérisation en suspension inverse conduisent à des produits à l'état de poudre qui présentent l'inconvénient de générer de la poussière au moment de l'utilisation, de se dissoudre difficilement dans l'eau et de ne pas pouvoir former des solutions aqueuses de polymères de concentration élevée qui puissent être manipulées aisément. Outre cette mise en oeuvre incommode qui est propre à l'état pulvérulent du produit, ces deux procédés présentent un désavantage en termes de productivité, d'une part en raison de la faible concentration en monomère utilisée en cours de la polymérisation, et, d'autre part, à cause d'une étape de séchage et/ou broyage induisant une augmentation du temps de cycle et un surcoût de consommation d'énergie. Le procédé en émulsion inverse qui est connu depuis environ deux décennies conduit quant à lui à un produit ayant un solvant organique polluant.

Pour remédier à ces inconvénients, il a été développé une nouvelle technique de polymérisation conduisant à des dispersions aqueuses de polymères hydrosolubles dont l'originalité réside sur le plan de la présentation, c'est-à-dire exemptes de solvant polluant, ne générant pas de poussière, rapidement solubles dans l'eau, de faible viscosité à taux de polymère élevé et prêtes à l'emploi. En revanche, cette technologie nécessite la mise au point des dispersants polymères adaptés pour la stabilité du polymère dispersé en milieu salin ou non salin.

Certains auteurs ont préparé des polymères hydrosolubles cationiques ou non ioniques par polymérisation de monomères hydrosolubles en présence de dispersant polymère de faible masse. Le brevet européen EP-B-170 394 décrit une dispersion de particules de gel de polymère de taille supérieure à 20 µm dans une solution de dispersant de poly(acrylique de sodium) ou de poly(chlorure de diallyldiméthylammonium). Cependant, ce produit présente l'inconvénient d'avoir une viscosité élevée après une longue période de stockage, la viscosité ne pouvant être diminuée qu'après cisaillement ou agitation.

Les demandes de brevets européens EP-A-183 466 et EP-A-525 751, les brevets américains US-A-4 929 655 et US-A-5 006 590 et la demande de brevet européen EP-A-657 478 proposent le cas de polymérisation précipitante en milieu salin de monomères hydrosolubles, dont le polymère précipite sous forme de particules, puis est dispersé par le biais de l'agitation et stabilisé par des dispersants polymères de faible masse, solubles quant à eux en milieu salin. Par ailleurs, ces particules sont difficiles à stabiliser à raison de leur grosse taille (2-50 µm).

Le problème qui se pose par conséquent à l'homme du métier comprend :
(1) d'une part, la mise au point de dispersants polymères solubles en milieu aqueux salin et assurant une bonne stabilité des particules ; et
(2) d'autre part la mise au point de comonomères hydrosolubles, permettant la fabrication de copolymères insolubles dans une solution aqueuse de sels, pour permettre, par précipitation, la formation des particules et, par conséquent, la dispersion de polymère dite "émulsion eau/eau".

En ce qui concerne le dispersant, deux approches peuvent être envisagées pour atteindre cet objectif de stabilisation : d'une part en viscosifiant la phase continue par le biais des effets associatifs apportés par le dispersant pour éviter la sédimentation des particules, et, d'autre part, en favorisant une adsorption efficace du dispersant à la surface des particules pour une meilleure efficacité en tant que colloïde protecteur, pour éviter la coalescence des particules. Dans ce dernier cas, les motifs hydrophobes présents dans la structure du dispersant peuvent fortement y contribuer. Ces dispersants doivent avoir des faibles masses, pour assurer leur solubilité en milieu aqueux salin et posséder des fonctions cationiques nécessaires pour la floculation. Les dispersants typiques de ces polymérisations sont le poly(chlorure de diallyldiméthylammonium) ou le copolymère chlorure de diallyldiméthylammonium/chlorure de (méth)acryloyloxyéthyldiméthylhexadécylammonium (cf. demande de brevet européen EP-A-657 478). Dans ce dernier cas, il est décrit que le caractère associatif peut être assuré par les chaînes alkyle du chlorure de (méth)acryloyloxyéthyldiméthylhexadécylammonium. La synthèse de ce dispersant s'opère en milieu aqueux, ne permettant ainsi que l'utilisation du second comonomère qui certes est moins hydrophile que le chlorure de diallyldiméthylammonium, mais doit être hydrosoluble. Ce point limite considérablement le caractère hydrophobe de ces copolymères dispersants. Il est important de préciser qu'une augmentation du caractère hydrophobe devrait permettre l'obtention d'une dispersion de fluidité améliorée.

En ce qui concerne le polymère précipité à stabiliser, des copolymères cationiques ou amphotères sont obtenus en polymérisant en présence de dispersant, d'eau et de sels, un mélange de monomères hydrosolubles. Le copolymère n'étant pas soluble en milieu aqueux salin, il se forme des particules de polymère, par précipitation, en raison de la diminution des répulsions électrostatiques du polyélectrolyte de masse molaire élevée. Le mélange typique de monomère pour ce type de polymérisation est constitué de (méth)acrylamide, de chlorure de (méth)acryloxyéthyldiméthyltriméthyl ammonium et le chlorure de (méth) acryloxyéthyldiméthyldiméthyl benzyl ammonium (brevet américain US-A-4 929 655). Ce dernier joue un rôle important dans la précipitation du polymère cationique formé en cours de synthèse et dans la formation de particules. Le brevet américain US-A-5 587 415 montre qu'il est possible de s'affranchir de ce monomère en le substituant par un autre équivalent dans lequel le groupe benzyle est remplacé par une chaîne alkyle suffisamment hydrophobe en C₄₋₁₀. De même, le brevet américain US-A-5 614 602 montre qu'on peut atteindre le même résultats en substituant partiellement le (méth)acrylamide par un N-alkylacrylamide ou par un N,N-dialkylacrylamide. La demande de brevet européen EP-A-0 717 056 revendique des dispersions de polymères hydrosolubles amphotères à base de monomères cationiques, dont le chlorure de (méth)acryloxyéthyldiméthyldiméthyl benzyl ammonium, et anioniques (acide acrylique), synthétisées en présence de dispersant.

Les documents-brevets JP-A-61 123 610, EP-A-183 466 et US-A-5 006 590 décrivent un procédé de préparation d'une dispersion aqueuse saline de polymère hydrosoluble à base d'au moins 5% molaire de chlorure d'acryloxyéthyldiméthylbenzyl ammonium (ADAMQUAT BZ). La demande de brevet européen EP-A-0 525 751 concerne des monomères de formule générale : 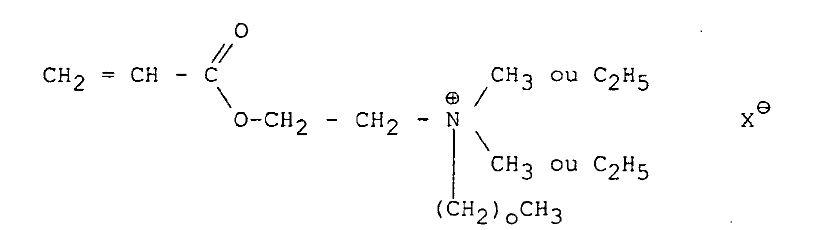 avec o entier de 3 à 9 et X^{⊖} = anion monovalent pouvant être Cl^{⊖}, Br^{⊖} ou I^{⊖},
dont l'ADAMQUAT C10, monomère correspondant à o = 9, qui, utilisé à raison d'au moins 5% molaire permet l'obtention de dispersions aqueuses salines. Le brevet américain US-A-5 696 228 propose l'utilisation d'acrylate de diéthylaminoéthyle quaternisé par le sulfate de diméthyle : 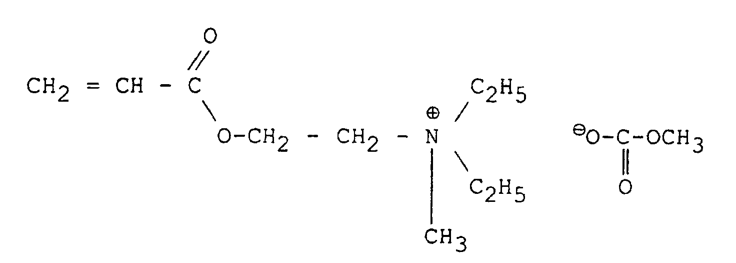 (ADAE DMS)
(entre 5 et 55% molaire) en combinaison avec 0 à 35% molaire d'ADAMQUAT BZ ou d'ADAMQUAT MC (chlorure d'acryloxyéthyltriméthylammonium) pour la préparation de dispersions aqueuses salines.

La Société déposante a maintenant découvert des monomères cationiques qui permettent la préparation de polymères hydrosolubles, insolubles dans une solution aqueuse de sels minéraux, mais solubles par simple dilution à l'eau. Elle a ainsi mis au point un procédé de préparation de nouvelles dispersions aqueuses de polymères hydrosolubles, stabilisées par un dispersant polymère, ces dispersions aqueuses répondant aux objectifs fixés de présenter une bonne fluidité et une bonne stabilité au stockage.

La Société déposante vient de montrer que des copolymères obtenus en couplant les monomères précités (de la famille du S-ADAMQUAT 2BZ qui sera décrite plus en détail ci-après) avec les monomères de la famille de l'ADAMQUAT BZ (qui sera également décrite plus en détail ci-après), permettent d'une part, de préparer des dispersions aqueuses fluides en utilisant un taux molaire des monomères de la famille de l'ADAMQUAT BZ généralement inférieur à 5%, et, d'autre part, d'améliorer le procédé et la fluidité des dispersions de polymères ayant un taux en ces monomères de la famille de l'ADAMQUAT BZ qui est supérieur à 5%.

La présente invention a donc d'abord pour objet une dispersion aqueuse saline d'un copolymère hydrosoluble obtenu à partir d'une compositions de monomères, comprenant pour 100 parties en moles :
(1) de 0,10 à 65 parties en moles d'au moins un composé de formule (I) : 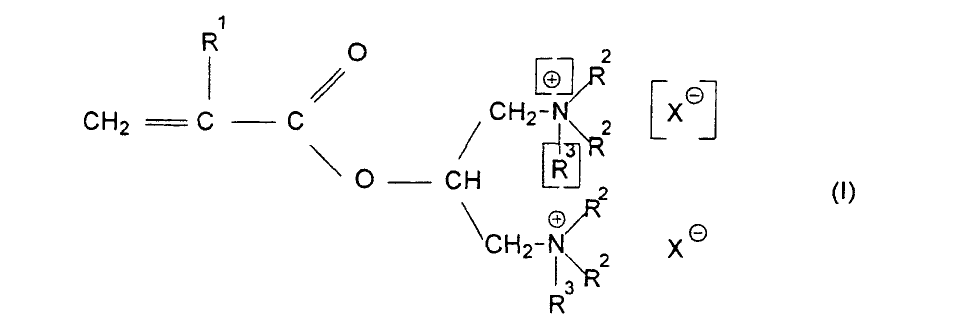 dans laquelle :
   - R¹ représente H ou -CH₃ ;
   - R² représente -CH₃ ; -C₂H₅ ; -C₃H₇ ou -C₄H₉ ; et
   - le composé (I) est facultativement quaternisé sur l'un des azotes, ce qui est symbolisé par le fait que les R³, X^{⊖} et ^{⊕} associés à cet azote sont entre crochets ;
   - lorsque le composé (I) est quaternisé sur un seul azote, R³ et X^{⊖} ont les significations suivantes:
      (1) R³ représente -CH₂-C₆H₅ ; et X^{⊖} représente Cl^{⊖} ou CH₃OSO₃^{⊖} ; ou
      (2) R³ représente -(CH₂)ₚCH₃ avec p entier de 3 à 11 ; et X^{⊖} représente Br^{⊖} ou I^{⊖} ;
   - lorsque le composé (I) est quaternisé sur les deux azotes, les deux X^{⊖} peuvent être identiques ou différents et les deux R³ peuvent être identiques ou différents, auquel cas :
      (3) R³ représente -CH₂-C₆H₅ ; et X^{⊖} représente Cl^{⊖} ; ou
      (4) R³ représente -(CH₂)ₚCH₃ avec p entier de 3 à 11 ; et X^{⊖} représente Br^{⊖} ou I^{⊖} ;
      (5) parmi les composés (I) quaternisés sur les deux azotes et ayant les deux R³ différents, si l'un des R³ représente -CH₃, -C₂H₅ ou -C₃H₇ ; et X^{⊖} représente Cl^{⊖} ou CH₃OSO₃^{⊖}, l'autre représente -CH₂C₆H₅, le X^{⊖} associé représentant Cl^{⊖}, ou représente -(CH₂)ₚCH₃ avec p entier de 3 à 11, le X^{⊖} associé représentant Br^{⊖} ou I^{⊖} ;
(2) de 0,5 à 95 parties en moles d'au moins un monomère choisi parmi :
   (2a) ceux de la formule (II) : 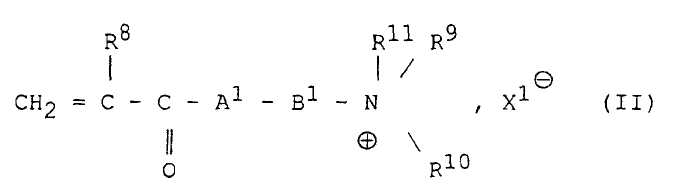 dans laquelle :
      - R⁸ représente H ou -CH₃ ;
      - A¹ représente -O- ou -NH- ;
      - B¹ représente -CH₂-CH₂- , -CH₂-CH₂-CH₂- ou - CH₂-CHOH-CH₂- ;
      - R⁹ et R¹⁰ représentent chacun -CH₃ ou - CH₂CH₃ ;
      - R¹¹ représente -(CH₂)_{O}-CH₃, avec o entier de 3 à 9 , ou 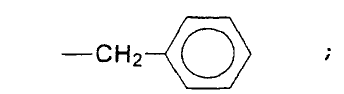 et
      - X^{1⊖} représente un ion monovalent, tel que Cl^{⊖}, SCN^{⊖}, CH₃SO₃ et Br^{⊖} ; et
   (2b) ceux de formule (III) : 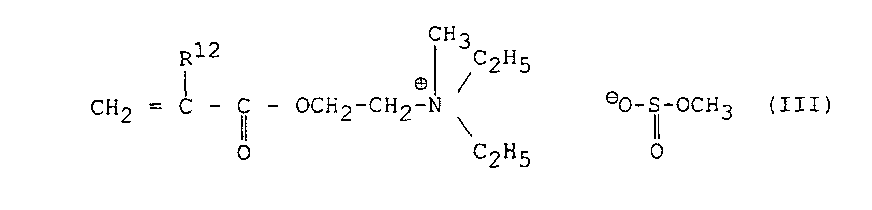 dans laquelle :
      - R¹² représente H ou -CH₃ ;
(3) de 0 à 95 parties en moles d'au moins un monomère de formule (IV) : 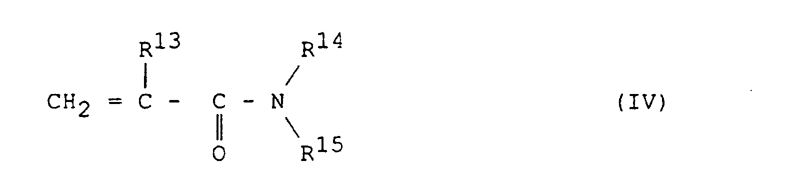 dans laquelle :
   - R¹³ représente H ou -CH₃ ;
   - R¹⁴ et R¹⁵, identiques ou différents, représentent chacun indépendamment H ou alkyle en C₁₋₅ ;
(4) de 0 à 95 parties en moles d'au moins un monomère de formule (V) : 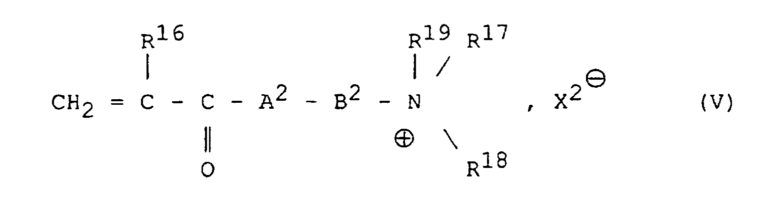 dans laquelle :
   - R¹⁶ représente H ou -CH₃ ;
   - A² représente -O- ou -NH- ;
   - B² représente -CH₂CH₂- , -CH₂CH₂CH₂- ou - CH₂CHOHCH₂- ;
   - R¹⁷ et R¹⁸ représentent chacun indépendamment - CH₃ ou -CH₂CH₃ ;
   - R¹⁹ représente H, -CH₃ ou -CH₂CH₃ ;
   - X^{2⊖} représente un anion monovalent, tel que Cl^{⊖}, SCN⊖, CH₃SO₃^{⊖} et Br^{⊖} ;
(5) de 0 à 95 parties en moles d'au moins un monomère de la formule (VI) : 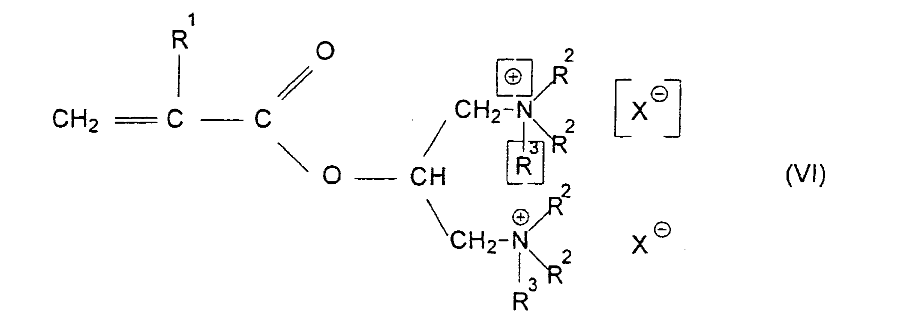 dans laquelle :
   - R¹ représente H ou -CH₃ ;
   - R² représente -CH₃ ; -C₂H₅ ou -C₃H₇ ; et
   - le composé (IV) est facultativement quaternisé sur l'un des azotes, ce qui est symbolisé par le fait que les R³, X^{⊖} et ^{⊕} associés à cet azote sont entre crochets ;
   - R³ représente -CH₃, -C₂H₅ ou -C₃H₇ ; et
   - X^{⊖} représente Cl^{⊖} ou CH₃OSO₃^{⊖} ; et
   - lorsque le composé (VI) est quaternisé sur les deux azotes, les deux X^{⊖} peuvent être identiques ou différents et les deux R³ peuvent être identiques ou différents ; et
(6) de 0 à 50 parties en moles d'au moins un monomère anionique choisi parmi les acides carboxyliques à insaturation éthylénique, les acides sulfoniques à insaturation éthylénique, les acides sulfuriques à insaturation éthylénique et les dérivés de ces acides (tels que, par exemple, les sels).

Le monomère de formule (I) préféré est le composé de formule (Ia) :

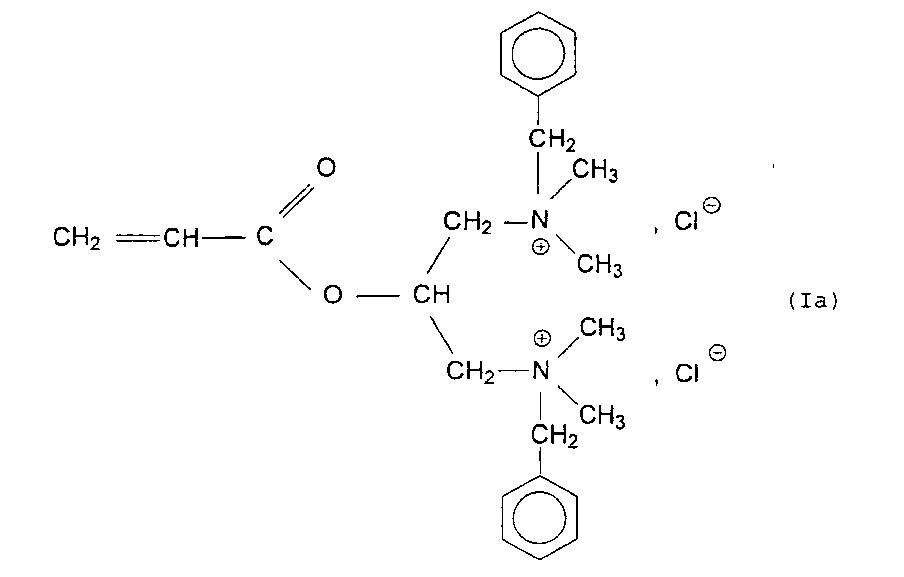

A titre d'exemples de monomères (2a), on peut citer d' ADAMQUAT BZ et l'ADAMQUAT C10, dont les désignations ont été indiquées ci-dessus.

A titre d'exemples de monomères (3), on peut citer l'acrylamide, le N-méthylacrylamide et le N,N-diméthyl acrylamide.

A titre d'exemples de monomères (4), on peut citer les halogénures (chlorures) de (méth)acryloxyéthyltriméthyl ammonium.

A titre d'exemple de monomère (5), on peut citer le composé de formule (VIa) :

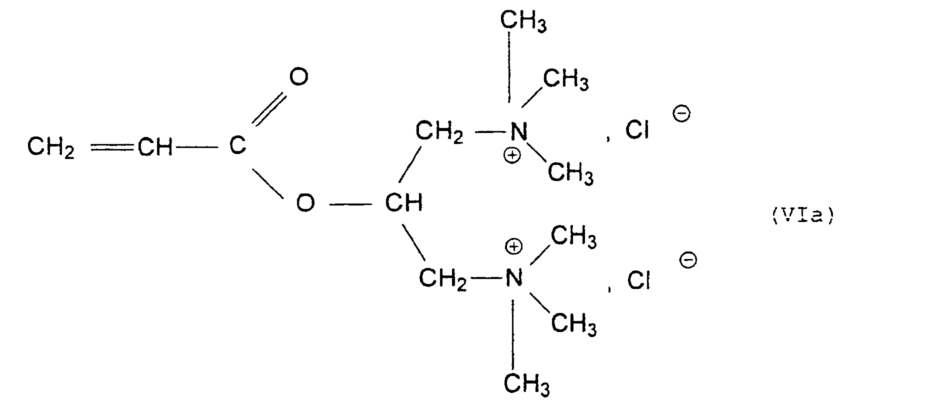

A titre d'exemples de monomères (6), on peut citer l'acide (méth)acrylique et l'acide 3-sulfopropyl(méth)acrylate.

Conformément à un mode de réalisation préféré des dispersions selon l'invention, celles-ci contiennent :
(A) de 10 à 50 parties en poids, en particulier de 15 à 30 parties en poids, de copolymère dispersé à base de la composition des monomères (1) à (6) précités ;
(B) de 0,5 à 25 parties en poids, en particulier de 1 à 10 parties en poids, d'au moins un (co)polymère dispersant ; et
(C) de 10 à 45 parties en poids, en particulier de 21,5 à 34 parties en poids, d'au moins un sel minéral tel que la solution aqueuse dudit sel dissout ledit copolymère dispersant sans dissoudre ledit copolymère dispersé formé en cours de polymérisation,
le complément étant constitué par l'eau.

Le ou les (co)polymères dispersants (B) sont choisis parmi les (co)polymères de masse molaire inférieure à 600 000, cationiques, amphotères ou non ioniques, solubles
ou partiellement solubles en milieu aqueux salin.

A titre d'exemple, on peut indiquer :
- le poly(chlorure de diallyldiméthylammonium) ;
- le poly(chlorure d'acryloxyéthyltriméthyl ammonium) ;
- les copolymères à base de chlorure de diallyldiméthylammonium ou de chlorure d'acryloxyéthyltriméthyl ammonium ;
- les copolymères styrène-anhydride maléique imidisés et quaternisés par un chlorure d'alkyle ou de benzyle ou par un acide ;
- le poly(chlorure d'acrylamido propyl propyl triméthyl ammonium) ;
- le polyacrylamide ;
- le poly(alcool vinylique) ; et
- le poly(oxyde d'éthylène).

Les dispersants préférés sont :
- les polymères cationiques à base de styrène, de chlorure d'acryloxyéthyltriméthyl ammonium et de méthacrylate polyéthoxy avec ou sans groupement hydrophobe, ce dernier étant soit le groupement triphényl styryle soit une chaîne alkyle ;
- les polymères amphotères à base de styrène, de chlorure d'acryloxyéthyltriméthyl ammonium, d'acide méthacrylique et de méthacrylate polyéthoxy avec ou sans groupement hydrophobe, ce dernier étant soit le groupement triphényl styryle soit une chaîne alkyle ;
- les polymères cationiques à base de styrène, de chlorure de diallyldiméthyl ammonium et de méthacrylate polyéthoxy avec ou sans groupement hydrophobe, ce dernier étant soit le groupement triphényl styryle soit une chaîne alkyle ; et
- les polymères cationiques à base de styrène, de chlorure d'acryloxyéthyltriméthyl ammonium et de (méth)acrylate d'alkyle à longue chaîne en C₁₂₋₃₀,
le méthacrylate polyéthoxy avec un groupement triphényl styryle étant représenté par la formule (VII) : 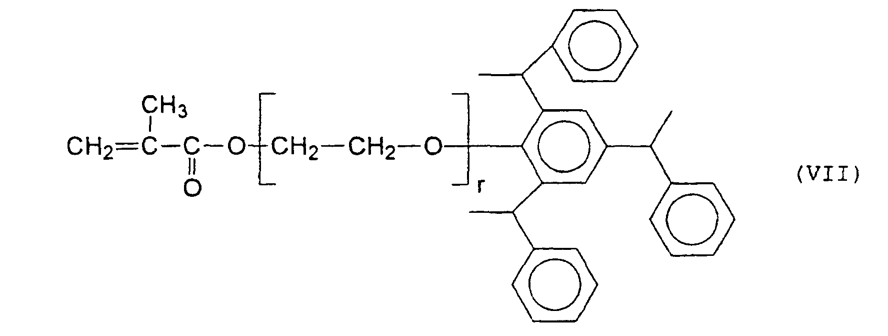 avec r entier de 1 à 60.

Le ou les sels (C) sont des sels minéraux dont la solution aqueuse dissout les polymères dispersants sans dissoudre le polymère dispersé formé au cours de la polymérisation. Les sels représentatifs sont le sulfate d'ammonium, le sulfate de sodium, le sulfate d' aluminium, le chlorure de sodium, le dihydrogénophosphate de sodium et l'hydrogénophosphate de sodium. Ces sels kosmotropiques peuvent être combinés avec un sel chaotropique tel que le thiocyanate de sodium ou le thiocyanate d'ammonium.

La présente invention porte également sur un procédé de fabrication d'une dispersion aqueuse telle que définie ci-dessus, caractérisé par le fait que l'on conduit une polymérisation radicalaire en milieu aqueux salin du ou des monomères (1) à (6) tels que définis ci-dessus, en présence d'au moins un dispersant polymère (B) tel que défini ci-dessus, et d'au moins un sel minéral (C) tel que défini ci-dessus.

On prépare la dispersion aqueuse en utilisant notamment :
- de 10 à 50 parties en poids, notamment de 15 à 30 parties en poids, de la composition des monomères hydrosolubles (1) à (6) précités ;
- de 0,5 à 25 parties en poids, notamment de 1 à 10 parties en poids, du ou des dispersants polymères (B) ; et
- de 10 à 45 parties en poids, notamment de 21,5 à 34 parties en poids, du ou des sels (C),
ces parties étant rapportées à 100 parties en poids du mélange réactionnel constitué par l'eau, le ou les polymères dispersants (B) , le ou les sels (C) et la composition des monomères (1) à (6).

Le ou les sels (C) peuvent être ajoutés en deux fois. Ainsi, pendant la polymérisation, on peut ajouter 10 à 30 parties en poids de sel(s), de préférence 16,5 à 25 parties en poids, et, en post-addition, rajouter 2 à 15 parties en poids de sel(s). La totalité du ou des sels peut également être ajoutée pendant la polymérisation.

La polymérisation peut être amorcée par différents moyens, comme les générateurs de radicaux libres tels que les peroxydes, les composés diazoïques ou les persulfates, ou par irradiation. Le mode préféré selon l'invention est l'amorçage par le dichlorhydrate de 2,2'-azo-bis(N,N'-diméthylèneisobutyramidine) ou le chlorhydrate de 2,2'-azo-bis(2-aminopropane). Ces amorceurs peuvent être combinés avec un accélarateur de décomposition. La température de polymérisation est comprise entre -40°C et 160°C, étant de préférence de 30 à 95°C. La conversion est supérieure à 99%.

La présente invention porte également sur l'utilisation des dispersions de copolymères hydrosolubles telles que définies ci-dessus ou préparées par le procédé tel que défini ci-dessus, comme agents de floculation pour le traitement des eaux usées ; agents déshydratants ; agents de rétention de fibres et charges dans les procédés de fabrication du papier ; agents facilitant le nettoyage de supports tels que le textile ; agents de dispersion de charges ; agents d'inhibition pour le transfert de pigments et colorants sur divers supports tels que le textile ; et épaississants.

Les exemples qui vont suivre, donnés à titre indicatif, permettent de mieux comprendre l'invention. Dans ces exemples, les parties et pourcentages indiqués sont en poids sauf indication contraire, et les abréviations suivantes ont été utilisées :
- ADAME :: acrylate de diméthylaminoéthyle
- ADAMQUAT MC :: chlorure d' acryloxyéthyltriméthyl ammonium
- ADAMQUAT BZ :: chlorure d'acryloxyéthyldiméthyl-benzyl ammonium
- S-ADAME :: acrylate de (2-diméthylamino-1-diméthylaminométhyl)éthyle : 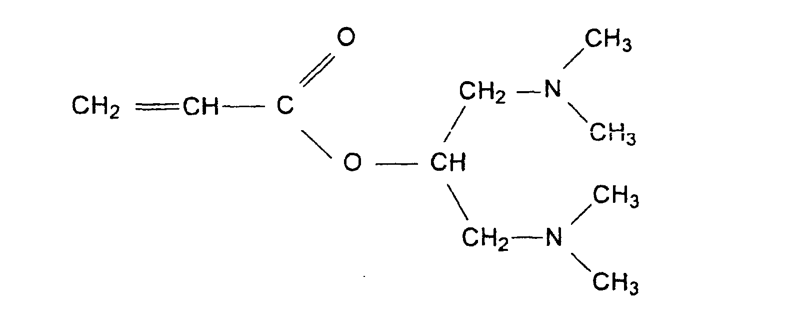
- S-ADAMQUAT 2BZ :: composé de la formule (Ia) précitée
- SIPOMER SEM :: méthacrylate polyéthoxy avec un groupement triphényl styryle, de formule : 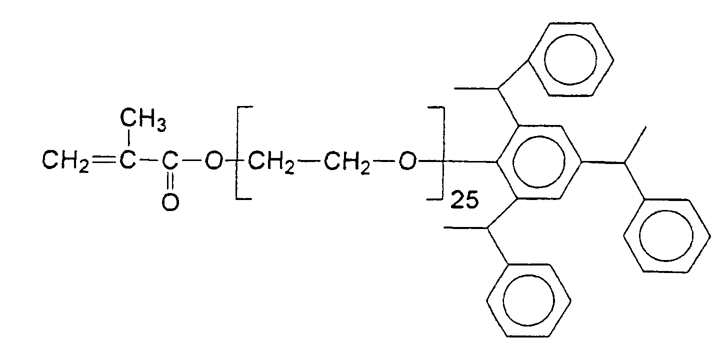
- AMA :: acide méthacrylique
- ABAH :: chlorhydrate de 2,2'-azo-bis-(2-amino-propane)
- VA-044 :: dichlorhydrate de 2,2'-azo-bis-(N,N'-diméthylèneisobutyramidine)

### EXEMPLE 1 (DE PRÉPARATION) :

### (a) Synthèse du S-ADAME

Dans un réacteur en verre de 1 litre, on charge :
- 292 g de 1,3-bis-diméthylamino-2 propanol ;
- 242 g de triéthylamine ; et
- 0,373 g de phénothiazine en tant que stabilisant.

Dans ce mélange agité, sous bullage d'air, à température ambiante, on ajoute, en 1 heure, 226 g d'anhydride acrylique. La température augmente pour atteindre 50°C. Après 2 heures supplémentaires de réaction, le mélange est refroidi et on ajoute 50 ml d'eau. Après décantation, on obtient une phase organique supérieure de 450 g, laquelle est distillée sous pression réduite pour isoler 250 g du composé de l'intitulé (pureté GC ≥ 99%).

### (b) Quaternisation du S-ADAME en S-ADAMQUAT 2BZ

Dans un réacteur en verre de 250 ml, on charge 44,2 g du S-ADAME obtenu au point (a) stabilisé avec 1500 ppm d'éther méthylique de l'hydroquinone et 150 g de CHCl₃. Le mélange sous agitation et sous bullage d'air est porté à 50°C. On ajoute en 1 heure, 55,9 g de chlorure de benzyle. Après 25 heures de réaction, l'acrylate de départ a disparu et l'on ajoute 33 g d'eau. On décante une phase supérieure qui est débarrassée des traces de CHCl₃ par stripping à l'air à 45°C sous pression réduite (P = 1,33 x 10⁴ Pa) (100 mm Hg)). On obtient ainsi 115,2 g de solution aqueuse contenant 75% de monomère cationique quaternaire ayant la structure attendue, déterminée par RMN ¹³C. Ce monomère est appelé S-ADAMQUAT 2BZ.

### EXEMPLE 2 : Préparation d'un copolymère dispersant

Dans un réacteur de 1 litre, on introduit sous agitation :
- 703,3 parties d'eau ;
- 36, 83 parties de styrène ; et
- 339,4 parties de solution aqueuse à 80% d'ADAMQUAT MC;
- 33,6 parties de solution aqueuse commerciale constituée de SIPOMER SEM, AMA et eau, dans les proportions de 60% de SIPOMER SEM, 20% d'AMA et 20% d'eau.

On porte le réacteur à 70°C sous balayage d'azote et agitation (150 tpm ; agitateur à ancre). On introduit ensuite, quand la température du milieu réactionnel est stabilisée à 70°C, 0,2 partie d'ABAH. Après 3 heures de réaction à 70°C, on porte la température du milieu réactionnel à 80°C et on introduit 0,2 partie d'ABAH. Après 2 heures de cuisson à 80°C, on refroidit et on récupère une solution à 30,3% de copolymère hydrosoluble ayant la composition molaire :
styrène / ADAMQUAT MC / SIPOMER SEM / AMA
19,23 / 76, 25 / 0, 67 / 3,84.

### EXEMPLE 3 : Préparation d'une dispersion aqueuse de copolymère hydrosoluble stabilisée par le copolymère dispersant de l'Exemple 2

Dans un réacteur de 1 litre, on introduit, sous agitation :
- 130 parties d'eau ;
- 120 parties de la solution aqueuse à 30,3% de copolymère dispersant hydrosoluble obtenue à l'Exemple 2 ;
- 20,43 parties d'une solution aqueuse à 73,5% de S-ADAMQUAT 2BZ ;
- 87,50 parties d'acrylamide à 50% dans l'eau ;
- 60,70 parties de solution aqueuse à 80% d'ADAMQUAT MC;
- 15,85 parties de solution aqueuse à 80% d'ADAMQUAT BZ; et
- 100 parties de sulfate d'ammonium.

On porte le réacteur à 53°C pendant 30 minutes sous balayage d'azote et on introduit 0,12 partie de VA-044 dilué dans 12 parties d'eau. La température est maintenue à 53°C pendant 2 heures. Ensuite, on rajoute 0,048 partie de VA-044 dilué dans 6 parties d'eau, et on laisse la réaction se dérouler pendant 30 minutes supplémentaires à 53°C. On chauffe le réacteur à une température de 60°C et au bout de 2h 30, on réalise une post-addition de :
- 32 parties de sulfate d'ammonium ;
- 0,6 partie de thiocyanate d'ammonium ; et
- 6 parties d'acide acétique.

Après une heure de mélange, on refroidit à 30°C, et on vide le réacteur.

On obtient une dispersion stable de copolymère
acrylamide / ADAMQUAT BZ / S-ADAMQUAT 2BZ / ADAMQUAT MC
65 / 4,95 / 3,5 /26,55 molaire, stabilisée par le dispersant copolymère de l'Exemple 2 et ayant une viscosité Brookfield de 1200 mPa. s (1200 cP) à 25°C.

### EXEMPLE 4 : Préparation d'une dispersion aqueuse de copolymère hydrosoluble stabilisée par le copolymère dispersant de l'Exemple 2

Dans un réacteur de 1 litre, on introduit, sous agitation :
- 138 parties d'eau ;
- 120 parties de la solution aqueuse à 30,3% de copolymère dispersant hydrosoluble obtenue à l'Exemple 2 ;
- 17,57 parties d'une solution aqueuse à 73,5% de S-ADAMQUAT 2BZ ;
- 88,38 parties d'acrylamide à 50% dans l'eau ;
- 62,70 parties de solution aqueuse à 80% d'ADAMQUAT MC;
- 15,85 parties de solution aqueuse à 80% d'ADAMQUAT BZ; et
- 100 parties de sulfate d'ammonium.

On porte le réacteur à 53°C pendant 30 minutes sous balayage d'azote et on introduit 0,12 partie de VA-044 dilué dans 12 parties d'eau. La température est maintenue à 53°C pendant 2 heures. Ensuite, on rajoute 0,048 partie de VA-044 dilué dans 6 parties d'eau, et on laisse la réaction se dérouler pendant 30 minutes supplémentaires à 53°C. On chauffe le réacteur à une température de 60°C et au bout de 2h 30, on réalise une post-addition de :
- 32 parties de sulfate d'ammonium ;
- 0,6 partie de thiocyanate d'ammonium ; et
- 6 parties d'acide acétique.

Après une heure de mélange, on refroidit à 30°C, et on vide le réacteur.

On obtient une dispersion stable de copolymère
acrylamide / ADAMQUAT BZ / S-ADAMQUAT 2BZ / ADAMQUAT MC
65 / 4,95 / 3 / 27 molaire, stabilisée par le dispersant copolymère de l'Exemple 2 et ayant une viscosité Brookfield de 1350 mPa.s (1350 cP) à 25°C.

### EXEMPLE 5 : Préparation d'une dispersion aqueuse de copolymère hydrosoluble stabilisée par le copolymère dispersant de l'Exemple 2

Dans un réacteur de 1 litre, on introduit, sous agitation :
- 138 parties d'eau ;
- 120 parties de la solution aqueuse à 30,3% de copolymère dispersant hydrosoluble obtenue à l'Exemple 2 ;
- 12,04 parties d'une solution aqueuse à 73,5% de S-ADAMQUAT 2BZ ;
- 90,27 parties d'acrylamide à 50% dans l'eau ;
- 66,16 parties de solution aqueuse à 80% d'ADAMQUAT MC;
- 16,35 parties de solution aqueuse à 80% d'ADAMQUAT BZ; et
- 100 parties de sulfate d'ammonium.

On porte le réacteur à 53°C pendant 30 minutes sous balayage d'azote et on introduit 0,12 partie de VA-044 dilué dans 5 parties d'eau. La température est maintenue à 53°C pendant 2 heures. Ensuite, on rajoute 0,048 partie de VA-044 dilué dans 6 parties d'eau, et on laisse la réaction se dérouler pendant 30 minutes supplémentaires à 53°C. On chauffe le réacteur à une température de 60°C et au bout de 2h 30, on réalise ensuite une post-addition de :
- 32 parties de sulfate d'ammonium ;
- 0,6 partie de thiocyanate d'ammonium ; et
- 6 parties d'acide acétique.

Après une heure de mélange, on refroidit à 30°C, et on vide le réacteur.

On obtient une dispersion stable de copolymère
Acrylamide / ADAMQUAT BZ / S-ADAMQUAT 2BZ / ADAMQUAT MC
65 / 4,95 / 2 / 27 molaire, stabilisée par le dispersant copolymère de l'Exemple 2 et ayant une viscosité Brookfield de 1800 mPa.s (1800 cP) à 25°C.

### EXEMPLE 6 (Comparatif) : Préparation d'une dispersion aqueuse de copolymère hydrosoluble sans S-ADAMQUAT 2BZ

Dans un réacteur de 1 litre, on introduit, sous agitation :
- 138 parties d'eau ;
- 120 parties de la solution aqueuse à 30,3% de copolymère dispersant hydrosoluble obtenue à l'Exemple 2 ;
- 96,72 parties d'acrylamide à 50% dans l'eau ;
- 72,30 parties de solution aqueuse à 80% d'ADAMQUAT MC;
- 17,25 parties de solution aqueuse à 80% d'ADAMQUAT BZ; et
- 100 parties de sulfate d'ammonium.

On porte le réacteur à 53°C pendant 30 minutes sous balayage d'azote et on introduit 0,12 partie de VA-044 dilué dans 12 parties d'eau. La température est maintenue à 53°C pendant 2 heures. Ensuite, on rajoute 0,048 partie de VA-044 dilué dans 6 parties d'eau, et on laisse la réaction se dérouler pendant 30 minutes supplémentaires à 53°C. On chauffe le réacteur à une température de 60°C et au bout de 2h30, on réalise une post-addition de :
- 32 parties de sulfate d'ammonium ;
- 0,6 partie de thiocyanate d'ammonium ; et
- 6 parties d'acide acétique.

Après une heure de mélange, on refroidit à 30°C et on vide le réacteur.

Le produit prend en masse au bout de 20 minutes de polymérisation et l'on obtient un gel constitué de copolymère
acrylamide / ADAMQUAT BZ / ADAMQUAT MC
66 / 4,95 / 29,05 molaire et du dispersant copolymère de l'Exemple 2 et ayant une forte viscosité, non mesurable par le dispositif précédent.

Pour un taux de 4,95% molaire d'ADAMQUAT BZ dans la composition des monomères à polymériser, il n'est donc pas possible d'obtenir une dispersion aqueuse de polymère. Le copolymère ne comportant pas suffisamment de motifs cationiques peu hydrophiles pour permettre la précipitation du polymère, se transforme en gel hautement visqueux. En revanche, l'incorporation de faible taux de S-ADAMQUAT 2BZ (2 à 3,5% molaire) dans la composition du monomère en conservant le taux d'ADAMQUAT BZ à 4,95% molaire, rend le nouveau copolymère moins hydrophile, favorisant ainsi sa précipitation et l'obtention d'une dispersion aqueuse fluide. Par ailleurs, la fluidité de la dispersion est améliorée en augmentant le taux de S-ADAMQUAT 2BZ.

### EXEMPLE 7 (Comparatif) : Préparation d'une dispersion de polymère hydrosoluble sans S-ADAMQUAT 2BZ

Dans un réacteur de 1 litre, on introduit, sous agitation :
- 138 parties d'eau ;
- 120 parties de la solution aqueuse à 30,3% de copolymère dispersant hydrosoluble obtenue à l'Exemple 2 ;
- 96,0 parties d'acrylamide à 50% dans l'eau ;
- 62,53 parties de solution aqueuse à 80% d'ADAMQUAT MC;
- 27,47 parties de solution aqueuse à 80% d'ADAMQUAT BZ; et
- 100 parties de sulfate d'ammonium.

On porte le réacteur à 53°C pendant 30 minutes sous balayage d'azote et on introduit 0,12 partie de VA-044 dilué dans 12 parties d'eau. La température est maintenue à 53°C pendant 2 heures. Ensuite, on rajoute 0,048 partie de VA-044 dilué dans 6 parties d'eau, et on laisse la réaction se dérouler pendant 30 minutes supplémentaires à 53°C. On chauffe le réacteur à une température de 60°C et au bout de 2h30, on réalise une post-addition de :
- 32 parties de sulfate d'ammonium ;
- 0,6 partie de thiocyanate d'ammonium ; et
- 6 parties d'acide acétique.

Après une heure de mélange, on refroidit à 30°C et on vide le réacteur.

Le produit prend en masse au bout de 20 minutes de polymérisation et l'on obtient un gel constitué de copolymère
acrylamide / ADAMQUAT BZ / ADAMQUAT MC
66,5 / 8 / 26 molaire et du dispersant copolymère de l'Exemple 2 et ayant une forte viscosité, non mesurable par le dispositif précédent.

Pour un taux plus élevé d'ADAMQUAT BZ (8% molaire) dans la composition des monomères à polymériser, il n'est donc pas possible d'obtenir une dispersion aqueuse de polymère. Le copolymère ne comportant pas suffisamment de motifs cationiques peu hydrophiles pour permettre la précipitation du polymère, se transforme en gel hautement visqueux.

### EXEMPLE 8 : Préparation d'une dispersion aqueuse de copolymère hydrosoluble ayant 8% molaire d'ADAMQUAT BZ couplé avec le S-ADAMQUAT 2BZ et stabilisée par le copolymère dispersant de l'Exemple 2

Dans un réacteur de 1 litre, on introduit, sous agitation :
- 138 parties d'eau ;
- 120 parties de la solution aqueuse à 30,3% de copolymère dispersant hydrosoluble obtenue à l'Exemple 2 ;
- 11,74 parties de solution aqueuse à 73,5% de S-ADAMQUAT 2BZ ;
- 88,57 parties d'acrylamide à 50% dans l'eau ;
- 57,86 parties de solution aqueuse à 80% d'ADAMQUAT MC;
- 25,93 parties de solution aqueuse à 80% d'ADAMQUAT BZ; et
- 100 parties de sulfate d'ammonium.

On porte le réacteur à 53°C pendant 30 minutes sous balayage d'azote et on introduit 0,12 partie de VA-044 dilué dans 12 parties d'eau. La température est maintenue à 53°C pendant 2 heures. Ensuite, on rajoute 0,048 partie de VA-044 dilué dans 6 parties d'eau, et on laisse la réaction se dérouler pendant 30 minutes supplémentaires à 53°C. On chauffe le réacteur à une température de 60°C et au bout de 2h30, on réalise une post-addition de :
- 32 parties de sulfate d'ammonium ;
- 0,6 partie de thiocyanate d'ammonium ; et
- 6 parties d'acide acétique.

Après une heure de mélange, on refroidit à 30°C et on vide le réacteur.

On obtient une dispersion stable de copolymère
acrylamide / ADAMQUAT BZ / S-ADAMQUAT 2BZ / ADAMQUAT MC
65 / 8 / 2 / 25 molaire stabilisée par le dispersant copolymère de l'Exemple 2 et ayant une viscosité Brookfield de 1050 mPa.s (1050 cP) à 25°C.

### EXEMPLE 9 : Préparation d'une dispersion aqueuse de copolymère hydrosoluble ayant 8% molaire d'ADAMQUAT BZ couplé avec le S-ADAMQUAT 2BZ et stabilisée par le copolymère dispersant de l'Exemple 2

Dans un réacteur de 1 litre, on introduit, sous agitation :
- 138 parties d'eau ;
- 120 parties de la solution aqueuse à 30,3% de copolymère dispersant hydrosoluble obtenue à l'Exemple 2 ;
- 17,25 parties de solution aqueuse à 73,5% de S-ADAMQUAT 2BZ ;
- 86,77 parties d'acrylamide à 50% dans l'eau ;
- 54, 41 parties de solution aqueuse à 80% d'ADAMQUAT MC;
- 25,40 parties de solution aqueuse à 80% d'ADAMQUAT BZ; et
- 100 parties de sulfate d'ammonium.

On porte le réacteur à 53°C pendant 30 minutes sous balayage d'azote et on introduit 0,12 partie de VA-044 dilué dans 12 parties d'eau. La température est maintenue à 53°C pendant 2 heures. Ensuite, on rajoute 0,048 partie de VA-044 dilué dans 6 parties d'eau, et on laisse la réaction se dérouler pendant 30 minutes supplémentaires à 53°C. On chauffe le réacteur à une température de 60°C et au bout de 2h30, on réalise une post-addition de :
- 32 parties de sulfate d'ammonium ;
- 0,6 partie de thiocyanate d'ammonium ; et
- 6 parties d'acide acétique.

Après une heure de mélange, on refroidit à 30°C et on vide le réacteur.

On obtient une dispersion stable de copolymère acrylamide / ADAMQUAT BZ / S-ADAMQUAT 2BZ / ADAMQUAT MC
65 / 8 / 3 / 24 molaire stabilisée par le dispersant copolymère de l'Exemple 2 et ayant une viscosité Brookfield de 800 mPa.s (800 cP) à 25°C.

Pour un taux plus élevé d'ADAMQUAT BZ (8% molaire) dans la composition des monomères à polymériser, l'incorporation de S-ADAMQUAT 2BZ présente l'avantage d'une part d'améliorer la fluidité de la dispersion, et d'autre part d'éviter d'obtenir un produit hautement visqueux en cours de polymérisation.

## Revendications

1. Dispersion aqueuse saline d'un copolymère hydrosoluble obtenu à partir d'une compositions de monomères, comprenant pour 100 parties en moles :
(1) de 0,10 à 65 parties en moles d'au moins un composé de formule (I) : 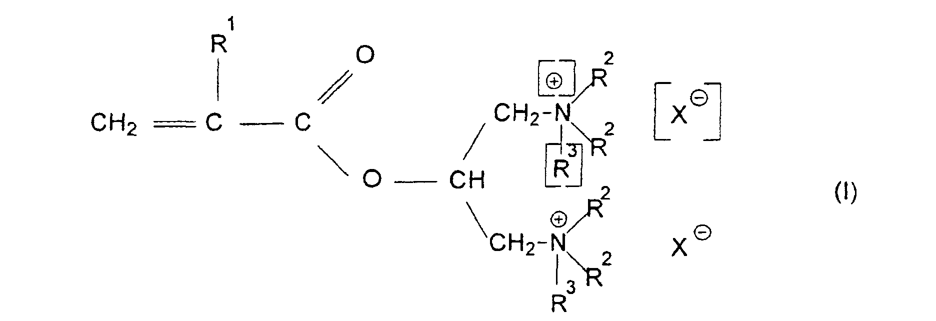 dans laquelle :
- R¹ représente H ou -CH₃ ;
- R² représente -CH₃ ; -C₂H₅ ; -C₃H₇ ou -C₄H₉ ; et
- le composé (I) est facultativement quaternisé sur l'un des azotes, ce qui est symbolisé par le fait que les R³, X^{⊖} et ^{⊕} associés à cet azote sont entre crochets ;
- lorsque le composé (I) est quaternisé sur un seul azote, R³ et X^{⊖} ont les significations suivantes:
(1) R³ représente -CH₂C₆H₅ ; et X^{⊖} représente Cl^{⊖} ou CH₃OSO₃^{⊖} ; ou
(2) R³ représente -(CH₂)ₚCH₃ avec p entier de 3 à 11 ; et X^{⊖} représente Br^{⊖} ou I^{⊖} ;
- lorsque le composé (I) est quaternisé sur les deux azotes, les deux X^{⊖} peuvent être identiques ou différents et les deux R³ peuvent être identiques ou différents, auquel cas :
(3) R³ représente -CH₂-C₆H₅ ; et X^{⊖} représente Cl^{⊖} ; ou
(4) R³ représente -(CH₂)ₚCH₃ avec p entier de 3 à 11 ; et X^{⊖} représente Br^{⊖} ou I^{⊖} ;
(5) parmi les composés (I) quaternisés sur les deux azotes et ayant les deux R³ différents, si l'un des R³ représente -CH₃, -C₂H₅ ou -C₃H₇; et X^{⊖} représente Cl^{⊖} ou CH₃OSO₃^{⊖}, l'autre représente -CH₂C₆H₅, le X^{⊖} associé représentant Cl^{⊖}, ou représente -(CH₂)ₚCH₃ avec p entier de 3 à 11, le X^{⊖} associé représentant Br^{⊖} ou I^{⊖} ;
(2) de 0,5 à 95 parties en moles d'au moins un monomère choisi parmi :
(2a) ceux de la formule (II) : 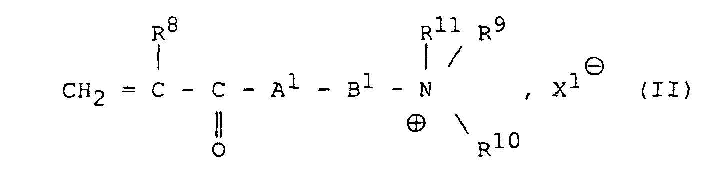 dans laquelle :
- R⁸ représente H ou -CH₃ ;
- A¹ représente -O- ou -NH- ;
- B¹ représente -CH₂-CH₂- , -CH₂-CH₂-CH₂- ou - CH₂-CHOH-CH₂- ;
- R⁹ et R¹⁰ représentent chacun -CH₃ ou - CH₂CH₃ ;
- R¹¹ représente -(CH₂)ₒ-CH₃, avec o entier de 3 à 9, ou 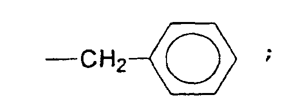 et
- X^{1⊖} représente un ion monovalent ; et
(2b) ceux de formule (III) : 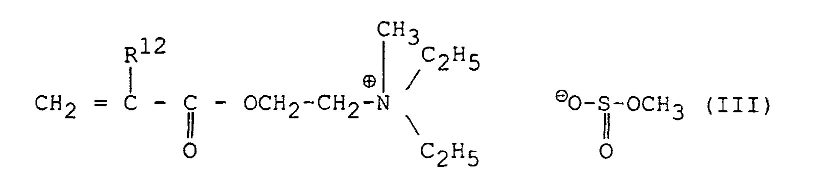 dans laquelle :
- R¹² représente H ou -CH₃ ;
(3) de 0 à 95 parties en moles d'au moins un monomère de formule (IV) : 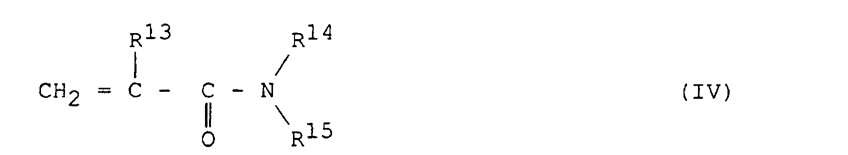 dans laquelle :
- R¹³ représente H ou -CH₃ ;
- R¹⁴ et R¹⁵, identiques ou différents, représentent chacun indépendamment H ou alkyle en C₁₋₅ ;
(4) de 0 à 95 parties en moles d'au moins un monomère de formule (V) : 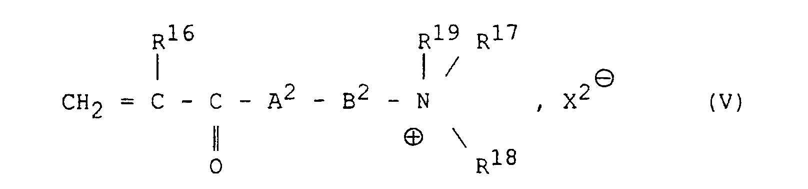 dans laquelle :
- R¹⁶ représente H ou -CH₃ ;
- A² représente -O- ou -NH- ;
- B² représente -CH₂CH₂- , -CH₂CH₂CH₂- ou - CH₂CHOHCH₂- ;
- R¹⁷ et R¹⁸ représentent chacun indépendamment - CH₃ ou -CH₂CH₃ ;
- R¹⁹ représente H, -CH₃ ou -CH₂CH₃ ;
- X^{2⊖} représente un anion monovalent ;
(5) de 0 à 95 parties en moles d'au moins un monomère de la formule (VI) : 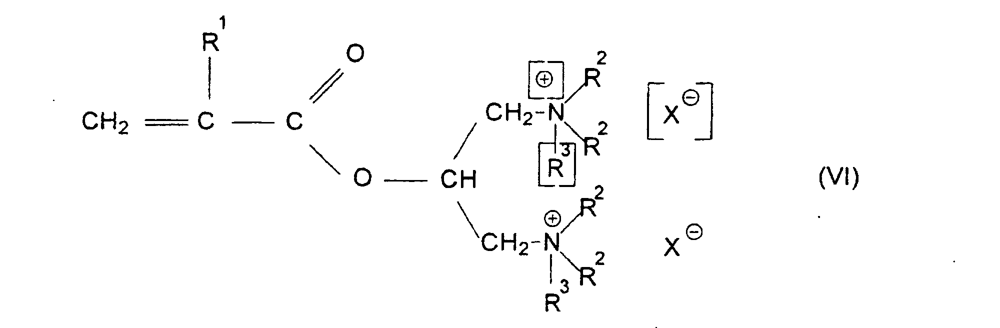 dans laquelle :
- R¹ représente H ou -CH₃ ;
- R² représente -CH₃ ; -C₂H₅ ou -C₃H₇ ; et
- le composé (IV) est facultativement quaternisé sur l'un des azotes, ce qui est symbolisé par le fait que les R³, X^{⊖} et ^{⊕} associés à cet azote sont entre crochets ;
- R³ représente -CH₃, -C₂H₅ ou -C₃H₇ ; et
- X^{⊖} représente Cl^{⊖} ou CH₃OSO₃^{⊖} ; et
- lorsque le composé (VI) est quaternisé sur les deux azotes, les deux X^{⊖} peuvent être identiques ou différents et les deux R³ peuvent être identiques ou différents ; et
(6) de 0 à 50 parties en moles d'au moins un monomère anionique choisi parmi les acides carboxyliques à insaturation éthylénique, les acides sulf oniques à insaturation éthylénique, les acides sulfuriques à insaturation éthylénique, et les dérivés de ces acides.

2. Dispersion aqueuse selon la revendication 1, **caractérisée par le fait que** le composé (I) est celui représenté par la formule (Ia) :

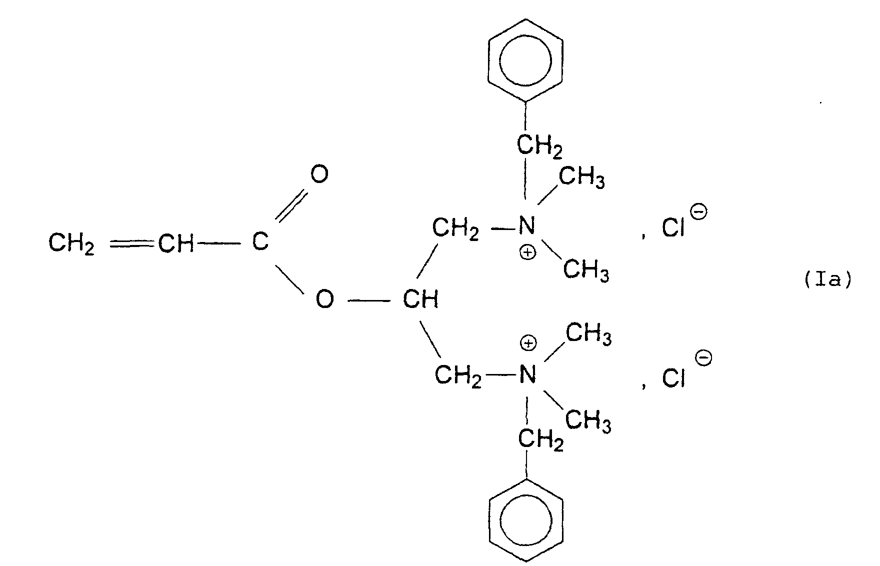

3. Dispersion aqueuse selon l'une des revendications 1 et 2, **caractérisée par le fait qu'**elle contient, pour 100 parties en poids :
(A) de 10 à 50 parties en poids de copolymère dispersé à base de la composition des monomères (1) à (6) tels que définis à l'une des revendications 1 et 2 ;
(B) de 0,5 à 25 parties en poids d'au moins un (co)polymère dispersant ; et
(C) de 10 à 45 parties en poids d'au moins un sel minéral tel que la solution aqueuse dudit sel dissout le (co)polymère dispersant sans dissoudre le copolymère dispersé formé en cours de polymérisation,
le complément étant constitué par l'eau.

4. Dispersion aqueuse selon la revendication 3, **caractérisée par le fait qu'**elle contient :
(A) de 15 à 30 parties en poids du copolymère dispersé;
(B) de 1 à 10 parties en poids du ou des (co)polymères dispersants ; et
(C) de 21,5 à 34 parties en poids du ou des sels minéraux, le complément étant constitué par l'eau.

5. Dispersion selon l'une des revendications 3 et 4, **caractérisée par le fait que** le ou les (co)polymères dispersants (B) sont choisis parmi les (co)polymères de masse moléculaire inférieure à 600 000, cationiques, amphotères ou non-ioniques, solubles ou partiellement solubles en milieu aqueux salin.

6. Dispersion selon la revendication 5, **caractérisée par le fait que** le ou les (co)polymères dispersants (B) sont choisis parmi :
• le poly(chlorure de diallyldiméthylammonium) ;
• le poly(chlorure d'acryloxyéthyltriméthyl ammonium) ;
• les copolymères à base de chlorure de diallyldiméthylammonium ou de chlorure d'acryloxyéthyltriméthyl ammonium ;
• les copolymères styrène-anhydride maléique imidisés et quaternisés par un chlorure d'alkyle ou de benzyle ou par un acide ;
• le poly(chlorure d'acrylamido propyl propyl triméthyl ammonium) ;
• le polyacrylamide ;
• le poly(alcool vinylique) ; et
• le poly(oxyde d'éthylène).

7. Dispersion selon la revendication 6, **caractérisée par le fait que** le ou les (co)polymères dispersants sont choisis parmi :
- les polymères cationiques à base de styrène, de chlorure d'acryloxyéthyltriméthyl ammonium et de méthacrylate polyéthoxy avec ou sans groupement hydrophobe, ce dernier étant soit le groupement triphényl styryle, soit une chaîne alkyle ;
- les polymères amphotères à base de styrène, de chlorure d'acryloxyéthyltriméthyl ammonium, d'acide méthacrylique et de méthacrylate polyéthoxy avec ou sans groupement hydrophobe, ce dernier étant soit le groupement triphényl styryle, soit une chaîne alkyle ;
- les polymères cationiques à base de styrène, de chlorure de diallyldiméthyl ammonium et de méthacrylate polyéthoxy avec ou sans groupement hydrophobe, ce dernier étant soit le groupement triphényl styryle, soit une chaîne alkyle ;
- les polymères cationiques à base de styrène, de chlorure d'acryloxyéthyltriméthyl ammonium et de (méth)acrylate d'alkyle à longue chaîne en C₁₂-C₃₀,
le méthacrylate polyéthoxy avec un groupement triphényl styryle étant représenté par la formule (VII): 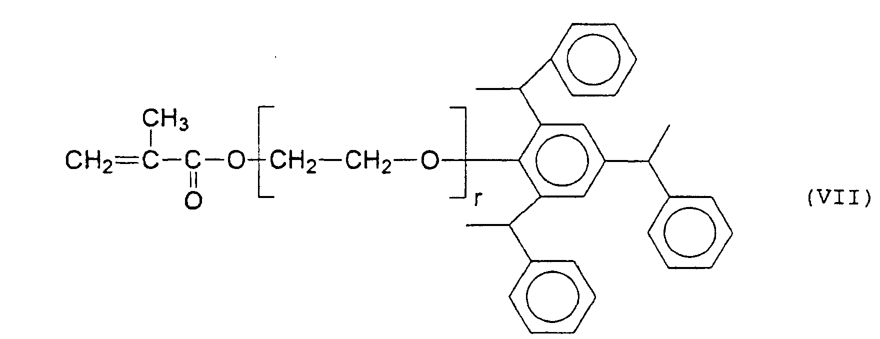 avec r entier de 1 à 60.

8. Dispersion selon l'une des revendications 1 à 7, **caractérisée par le fait que** le ou les sels (C) sont choisis parmi le sulfate d'ammonium, le sulfate de sodium, le sulfate d'aluminium, le chlorure de sodium, le dihydrogénophosphate de sodium et l'hydrogénophosphate de sodium, ces sels kosmotropiques pouvant être combinés avec un sel chaotropique tel que le thiocyanate de sodium ou le thiocyanate d'ammonium.

9. Procédé de fabrication d'une dispersion aqueuse telle que définie à l'une des revendications 1 à 8, **caractérisé par le fait que** l'on conduit la polymérisation radicalaire en milieu aqueux salin du ou des monomères (1) à (6) tels que définis à l'une des revendications 1 et 2, en présence d'au moins un dispersant polymère (B) tel que défini à la revendication 3, et d'au moins un sel minéral (C) tel que défini à la revendication 3.

10. Procédé selon la revendication 10, **caractérisé par le fait que** l'on prépare la dispersion aqueuse en utilisant :
- de 10 à 50 parties en poids de la composition des monomères hydrosolubles (1) à (6) ;
- de 0,5 à 25 parties en poids du ou des dispersants polymères (B) ; et
- de 10 à 45 parties en poids du ou des sels (C),
ces parties étant rapportées à 100 parties en poids du mélange réactionnel constitué par l'eau, le ou les polymères dispersants (B), le ou les sels (C) et la composition des monomères (1) à (6).

11. Procédé selon la revendication 10, **caractérisé par le fait que** l'on prépare la dispersion aqueuse en utilisant :
- de 15 à 30 parties en poids de la composition des monomères hydrosolubles (1) à (6) ;
- de 1 à 10 parties en poids du ou des dispersants polymères (B) ; et
- de 21,5 à 34 parties en poids du ou des sels (C), ces parties étant rapportées à 100 parties en poids du mélange réactionnel constitué par l'eau, le ou les polymères dispersants (B), le ou les sels (C) et la composition des monomères (1) à (6).

12. Procédé selon l'une des revendications 9 à 11, **caractérisé par le fait qu'**il est conduit à une température de -40°C à 160°C.

13. Procédé selon la revendication 12, **caractérisé par le fait qu'**il est conduit à une température de 30 à 95°C.

14. Utilisation des dispersions de copolymères hydrosolubles telles que définies à l'une des revendications 1 à 8 ou préparée par le procédé tel que défini à l'une des revendications 9 à 13, comme agents de floculation pour le traitement des eaux usées ; agents déshydratants ; agents de rétention de fibres et charges dans les procédés de fabrication du papier ; agents facilitant le nettoyage de supports tels que le textile ; agents de dispersion de charges ; agents d'inhibition pour le transfert de pigments et colorants sur divers supports tels que le textile ; et épaississants.

## Patentansprüche

1. Wässrige Salzdispersion eines wasserlöslichen Copolymers, das ausgehend von einer Zusammensetzung aus wasserlöslichen Monomeren hergestellt wird, die auf 100 Molteile enthält:
(1) 0,10 bis 65 Molteile mindestens einer Verbindung der Formel (I): 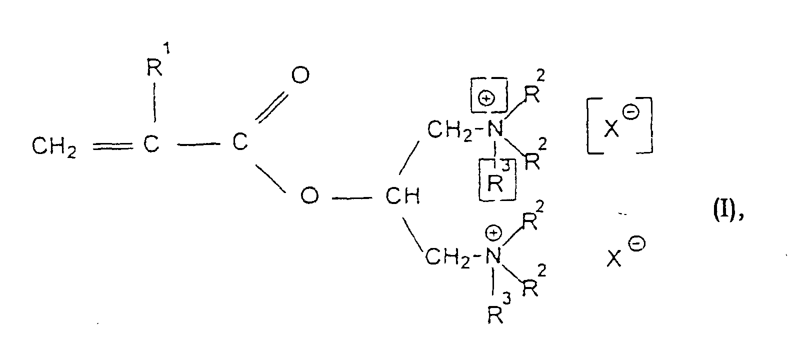 wobei:
- R¹ H oder -CH₃ bedeutet;
- R² -CH₃; -C₂H₅; -C₃H₇ oder -C₄H₉ bedeutet; und
- die Verbindung (I) an einem Stickstoffatom fakultativ quaternisiert sein kann, wobei diese Option dadurch ausgedrückt ist, dass R³, X^{⊖} und ^{⊕} an diesem Stickstoffatom in Klammern gesetzt sind;
- wenn die Verbindung (I) an nur einem Stickstoffatom quaternisiert ist, haben R³ und X^{⊖} die folgenden Bedeutungen:
(1) R³ bedeutet -CH₂C₆H₅; und X^{⊖} bedeutet Cl^{⊖} oder CH₃OSO₃^{⊖}; oder
(2) R³ bedeutet -(CH₂)ₚCH₃, wobei p eine ganze Zahl von 3 bis 11 ist; und X^{⊖} bedeutet Br^{⊖} oder I^{⊖};
- wenn die Verbindung (I) an beiden Stickstoffatomen quaternisiert ist, können die beiden Gruppen X^{⊖} gleich oder verschieden sein und die beiden Gruppen R³ können gleich oder verschieden sein, wobei in diesem Fall:
(3) R³ -CH₂-C₆H₅ bedeutet; und X^{⊖} Cl^{⊖} bedeutet; oder
(4) R³ -(CH₂)ₚCH₃ bedeutet, wobei p eine ganze Zahl von 3 bis 11 ist; und X^{⊖} Br^{⊖} oder I^{⊖} bedeutet;
(5) von den Verbindungen (I), die an beiden Stickstoffatomen quaternisiert sind und zwei unterschiedliche Gruppen R³ besitzen: wenn eine Gruppe R³ -CH₃, - C₂H₅ oder -C₃H₇ bedeutet; und X^{⊖} Cl^{⊖} oder - CH₃OSO₃^{⊖} ist, bedeutet die andere Gruppe R³ - CH₂C₆H₅ und die zugehörige Gruppe X^{⊖} Cl^{⊖} oder die andere Gruppe R³ bedeutet -(CH₂)ₚCH₃, wobei p eine ganze Zahl von 3 bis 11 ist, und die zugehörige Gruppe X^{⊖} bedeutet Br^{⊖} oder I^{⊖};
(2) 0,5 bis 95 Molteile mindestens eines Monomers, das ausgewählt ist unter:
(2a) Monomeren der Formel (II): 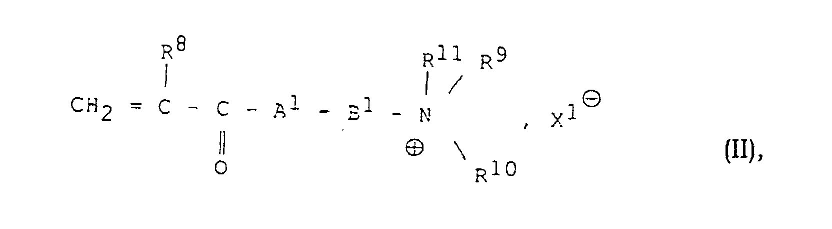 worin bedeuten:
- R8 H oder -CH₃;
- A¹ -O- oder -NH-;
- B¹ -CH₂CH₂-, -CH₂CH₂CH₂- oder -CH₂CHOHCH₂-;
- R⁹ und R¹⁰ jeweils CH₃ oder -CH₂CH₃;
- R¹¹ -(CH₂)ₒ-CH₃, wobei o eine ganze Zahl von 3 bis 9 ist, oder 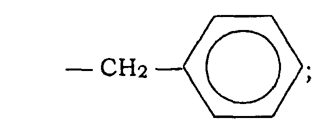 und
- X^{1⊖} ein einwertiges Anion; und
(2b) Monomeren der Formel (III): 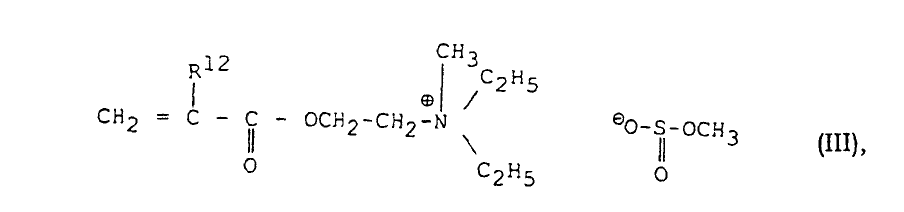 worin bedeutet:
- R¹² H oder -CH₃;
(3) 0 bis 95 Molteile mindestens eines Monomers der Formel (IV): 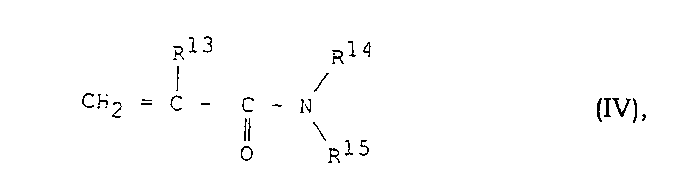 worin bedeuten:
- R¹³ H oder -CH₃;
- R¹⁴ und R¹⁵, die identisch oder voneinander verschieden sind, jeweils unabhängig H oder C₁₋₅-Alkyl;
(4) 0 bis 95 Molteile mindestens eines Monomers der Formel (V): 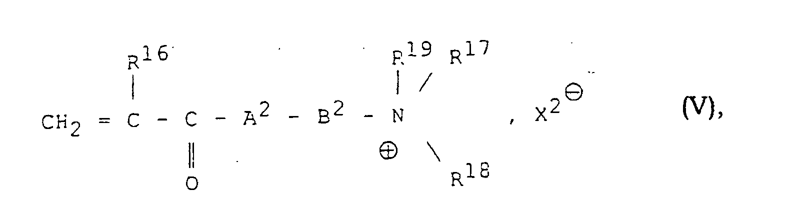 worin bedeuten:
- R¹⁶ H oder -CH₃;
- A² -O- oder -NH-;
- B² -CH₂CH₂-, -CH₂CH₂CH₂- oder -CH₂CHOHCH₂-;
- R¹⁷ und R¹⁸ jeweils unabhängig voneinander -CH₃ oder - CH₂CH₃;
- R¹⁹ H, -CH₃ oder -CH₂CH₃; und
- X^{2⊖} ein einwertiges Anion;
(5) 0 bis 95 Molteile mindestens eines Monomers der Formel (VI): 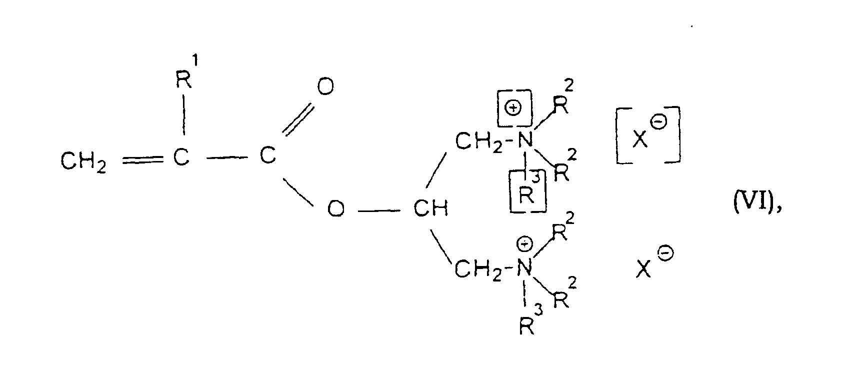 wobei:
- R¹ H oder -CH₃ bedeutet;
- R² -CH₃; -C₂H₅ oder -C₃H₇ bedeutet; und
- die Verbindung (VI) an einem Stickstoffatom wahlweise quaternisiert ist, wobei diese Option dadurch dargestellt ist, dass R³, X^{⊖} und ^{⊕} an diesem Stickstoffatom in Klammern gesetzt sind;
- R³, -CH₃, -C₂H₅ oder -C₃H₇ bedeutet; und
- X^{⊖} Cl^{⊖} oder CH₃OSO₃^{⊖} ist; und
- die beiden Gruppen X^{⊖} gleich oder verschieden sein können und die beiden Gruppen R³ gleich oder verschieden sein können, wenn die Verbindung (VI) an beiden Stickstoffatomen quaternisiert ist; und
(6) 0 bis 50 Molteile mindestens eines anionischen Monomers, das unter den Carbonsäuren mit ethylenischer Doppelbindung, den Sulfonsäuren mit ethylenischer Doppelbindung, den Schwefelsäuren mit ethylenischer Doppelbindung und deren Derivaten ausgewählt ist.

2. Wässrige Dispersion nach Anspruch 1, **dadurch gekennzeichnet, dass** die Verbindung (I) die Verbindung der Formel (Ia) ist:

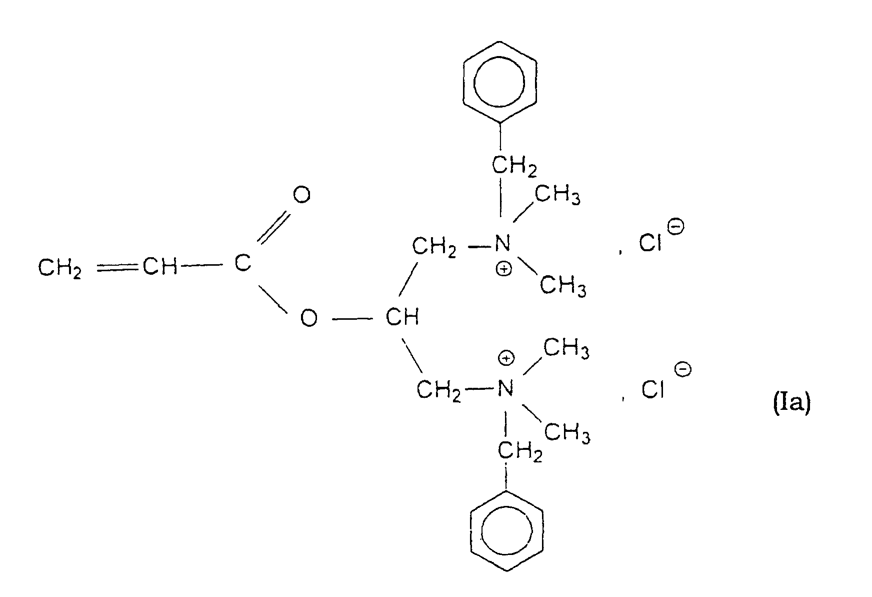

3. Wässrige Dispersion nach einem der Ansprüche 1 und 2, **dadurch gekennzeichnet, dass** sie auf 100 Gewichtsteile enthält:
(A) 10 bis 50 Gewichtsteile dispergiertes Copolymer auf der Basis der Zusammensetzung der Monomere (1) bis (6) nach einem der Ansprüche 1 und 2;
(B) 0,5 bis 25 Gewichtsteile mindestens eines dispergierenden (Co)polymers; und
(C) 10 bis 45 Gewichtsteile mindestens eines anorganischen Salzes, wobei die wässrige Lösung des Salzes das dispergierende (Co)polymer löst, ohne das im Laufe der Polymerisation gebildete, dispergierte Copolymer zu lösen,
wobei der Rest aus Wasser besteht.

4. Wässrige Dispersion nach Anspruch 3, **dadurch gekennzeichnet, dass** sie enthält:
(A) 15 bis 30 Gewichtsteile dispergiertes Copolymer;
(B) 1 bis 10 Gewichtsteile des dispergierenden (Co)polymers oder der dispergierenden (Co)polymere;
(C) 21,5 bis 34 Gewichtsteile anorganische(s) Salz(e),
wobei der Rest aus Wasser besteht.

5. Dispersion nach einem der Ansprüche 3 und 4, **dadurch gekennzeichnet, dass** das dispergierende (Co)polymer (B) oder die dispergierenden (Co)polymere (B) unter den kationischen, amphoteren oder nichtionischen, in einem wässrigen Salzmedium löslichen oder zum Teil löslichen (Co)polymeren mit einer Molmasse unter 600 000 ausgewählt sind.

6. Dispersion nach Anspruch 5, **dadurch gekennzeichnet, dass** das dispergierende (Co)polymer (B) oder die dispergierenden (Co)polymere (B) ausgewählt sind unter:
· Poly(diallyldimethylammoniumchlorid);
· Poly(acryloxyethyltrimethylammoniumchlorid);
· Copolymeren auf der Basis von Diallyldimethylammoniumchlorid oder Acryloxyethyltrimethylammoniumchlorid;
· Styrol/Maleinsäureanhydrid-Copolymeren, die imidiert und mit einem Alkylchlorid oder Benzylchlorid oder einer Säure quaternisiert sind;
· Poly(acrylamidopropylpropyltrimethylammoniumchlorid);
· Polyacrylamid;
· Poly(vinylalkohol); und
· Poly(ethylenoxid).

7. Dispersion nach Anspruch 6, **dadurch gekennzeichnet, dass** das dispergierende (Co)polymer oder die dispergierenden (Co)polymere ausgewählt sind unter:
- kationischen Polymeren auf der Basis von Styrol, Acryloxyethyltrimethylammoniumchlorid und Polyethoxymethacrylat mit einer hydrophoben Gruppe oder ohne hydrophobe Gruppe, wobei diese entweder die Triphenylstyrylgruppe oder eine Alkylkette ist;
- amphoteren Polymeren auf der Basis von Styrol, Acryloxyethyltrimethylammoniumchlorid, Methacrylsäure und Polyethoxymethacrylat mit einer hydrophoben Gruppe oder ohne hydrophobe Gruppe, wobei diese entweder die Triphenylstyrylgruppe oder eine Alkylkette ist;
- kationischen Polymeren auf der Basis von Styrol, Diallyldimethylammoniumchlorid und Polyethoxymethacrylat mit einer hydrophoben Gruppe oder ohne hydrophobe Gruppe, wobei diese entweder die Triphenylstyrylgruppe oder eine Alkylkette ist;
- kationischen Polymeren auf der Basis von Styrol, Acryloxyethyltrimethylammoniumchlorid und Alkyl(meth)acrylat mit langkettiger C₁₂₋₃₀-Alkylgruppe,
wobei das Polyethoxymethacrylat mit Triphenylstyrylgruppe durch die folgende Formel (VII) dargestellt werden kann: 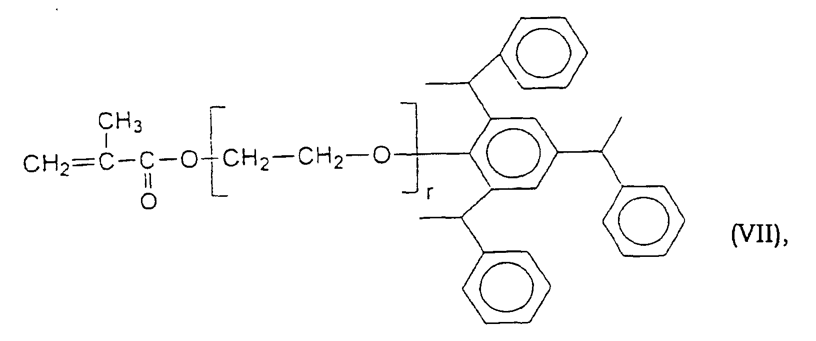 wobei r eine ganze Zahl von 1 bis 60 bedeutet.

8. Dispersion nach einem der Ansprüche 1 bis 7, **dadurch gekennzeichnet, dass** das Salz oder die Salze (C) unter Ammoniumsulfat, Natriumsulfat, Aluminiumsulfat, Natriumchlorid, Natriumdihydrogenphosphat und Natriumhydrogenphosphat ausgewählt sind, wobei diese kosmotropen Salze mit einem chaotropen Salz kombiniert werden können, wie Natriumthiocyanat oder Ammoniumthiocyanat.

9. Verfahren zur Herstellung einer wässrigen Dispersion nach einem der Ansprüche 1 bis 8, **dadurch gekennzeichnet, dass** die radikalische Polymerisation des Monomers oder der Monomere (1) bis (6) nach einem der Ansprüche 1 und 2 in einem wässrigen Salzmedium in Gegenwart mindestens eines dispergierenden Polymers (B) nach Anspruch 3 und mindestens eines anorganischen Salzes (C) nach Anspruch 3 durchgeführt wird.

10. Verfahren nach Anspruch 9, **dadurch gekennzeichnet, dass** die wässrige Dispersion hergestellt wird unter Verwendung von:
- 10 bis 50 Gewichtsteilen der Zusammensetzung der wasserlöslichen Monomere (1) bis (6);
- 0,5 bis 25 Gewichtsteilen des dispergierenden Polymers (B) oder der dispergierenden Polymere (B); und
- 10 bis 45 Gewichtsteilen des Salzes (C) oder der Salze (C),
wobei die Teile auf 100 Gewichtsteile des Reaktionsgemisches bezogen sind, das aus Wasser, dem dispergierenden Polymer (B) oder den dispergierenden Polymeren (B), dem Salz (C) oder den Salzen (C) und der Zusammensetzung der Monomere (1) bis (6) besteht.

11. Verfahren nach Anspruch 10, **dadurch gekennzeichnet, dass** die wässrige Dispersion hergestellt wird unter Verwendung von:
- 15 bis 30 Gewichtsteilen der Zusammensetzung der wasserlöslichen Monomere (1) bis (6);
- 1 bis 10 Gewichtsteilen des dispergierenden Polymers (B) oder der dispergierenden Polymere (B); und
- 21,5 bis 34 Gewichtsteilen des Salzes (C) oder der Salze (C),
wobei die Teile auf 100 Gewichtsteile des Reaktionsgemisches bezogen sind, das aus Wasser, dem dispergierenden Polymer (B) oder den dispergierenden Polymeren (B), dem Salz (C) oder den Salzen (C) und der Zusammensetzung der Monomere (1) bis (6) besteht.

12. Verfahren nach einem der Ansprüche 9 bis 11, **dadurch gekennzeichnet, dass** es bei einer Temperatur von -40 bis 160 °C durchgeführt wird.

13. Verfahren nach Anspruch 12, **dadurch gekennzeichnet, dass** es bei einer Temperatur von 30 bis 95 °C durchgeführt wird.

14. Verwendung von Dispersionen von wasserlöslichen Copolymeren nach einem der Ansprüche 1 bis 8 oder hergestellt nach dem Verfahren nach einem der Ansprüche 9 bis 13 als Flockungsmittel bei der Behandlung von Abwässern; Dehydratisierungsmittel; Retentionsmittel für Fasern und Füllstoffe bei der Herstellung von Papier; Stoffe, die die Reinigung von Trägern, wie Textilien, erleichtern; Dispergiermittel für Füllstoffe; Inhibitoren für den Transfer von Pigmenten und Farbmitteln auf verschiedene Träger, wie Textilien; und Verdickungsmittel.

## Claims

1. Saline aqueous dispersion of a water-soluble copolymer obtained from a monomer composition comprising, per 100 parts by moles:
(1) from 0.10 to 65 parts by moles of at least one compound of formula (I): 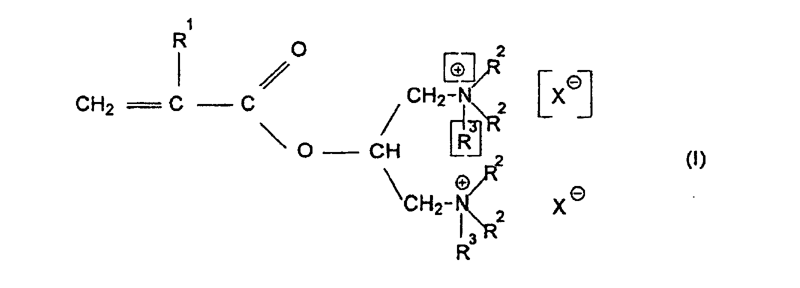 in which:
- R¹ represents H or -CH₃;
- R² represents -CH₃; -C₂H₅; -C₃H₇ or -C₄H₉; and
- the compound (I) is optionally quaternized on one of the nitrogens, which is symbolized by the fact that the R³, X⁻ and ⁺ entities associated with this nitrogen are between square brackets;
- when the compound (I) is quaternized on just one nitrogen, R³ and X⁻ have the following meanings:
(1) R³ represents -CH₂C₆H₅; and X⁻ represents Cl⁻ or CH₃OSO₃⁻; or
(2) R³ represents -(CH₂)ₚCH₃ with p an integer from 3 to 11; and X⁻ represents Br⁻ or I⁻;
- when the compound (I) is quaternized on both nitrogens, the two X⁻ entities can be identical or different and the two R³ entities can be identical or different, in which case:
(3) R³ represents -CH₂-C₆H₅; and X⁻ represents Cl⁻; or
(4) R³ represents -(CH₂)ₚCH₃ with p an integer from 3 to 11; and X⁻ represents Br⁻ or I⁻;
(5) among the compounds (I) quaternized on both nitrogens and having the two R³ entities different, if one of the R³ entities represents -CH₃, - C₂H₅ or -C₃H₇; and X⁻ represents Cl⁻ or CH₃OSO₃⁻, the other represents - CH₂C₆H₅, the associated X⁻ representing Cl⁻, or represents -(CH₂)ₚCH₃ with p an integer from 3 to 11, the associated X⁻ representing Br⁻ or I⁻;
(2) from 0.5 to 95 parts by moles of at least one monomer chosen from:
(2a) those of the formula (II): 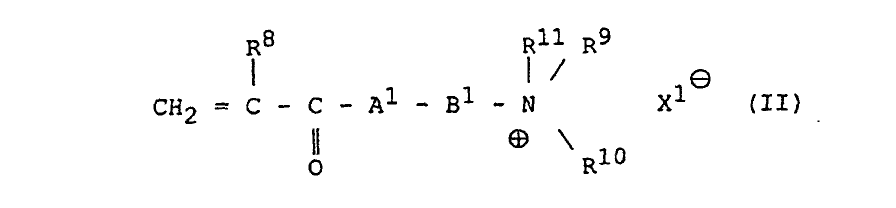 in which:
- R⁸ represents H or -CH₃;
- A¹ represents -O- or -NH-;
- B¹ represents -CH₂-CH₂-, -CH₂-CH₂-CH₂- or - CH₂-CHOH-CH₂-;
- R⁹ and R¹⁰ each represent -CH₃ or -CH₂CH₃;
- R¹¹ represents -(CH₂)ₒ-CH₃, with o an integer from 3 to 9, or 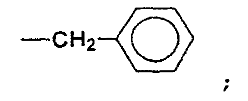 and
- X¹⁻ represents a monovalent ion; and
(2b) those of formula (III): 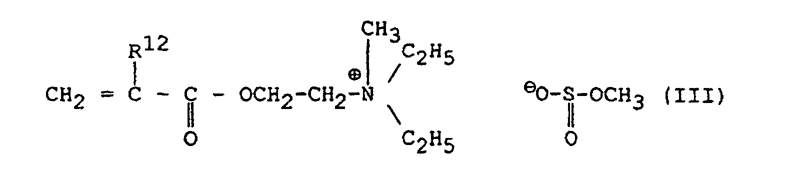 in which:
- R¹² represents H or -CH₃;
(3) from 0 to 95 parts by moles of at least one monomer of formula (IV): 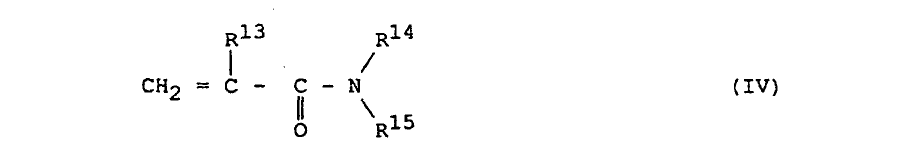 in which:
- R¹³ represents H or -CH₃;
- R¹⁴ and R¹⁵, which are identical or different, each independently represent H or C₁₋₅ alkyl;
(4) from 0 to 95 parts by moles of at least one monomer of formula (V): 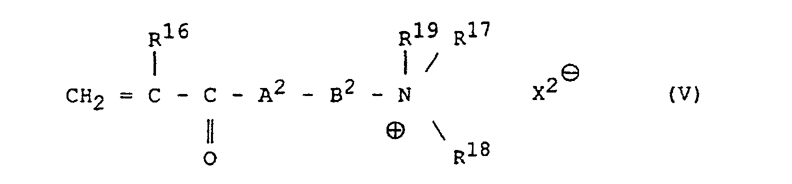 in which:
- R¹⁶ represents H or -CH₃;
- A² represents -O- or -NH-;
- B² represents -CH₂CH₂-, -CH₂CH₂CH₂- or - CH₂CHOHCH₂-;
- R¹⁷ and R¹⁸ each independently represent - CH₃ or -CH₂CH₃;
- R¹⁹ represents H, -CH₃ or -CH₂CH₃;
- X²⁻ represents a monovalent anion;
(5) from 0 to 95 parts by moles of at least one monomer of the formula (VI): 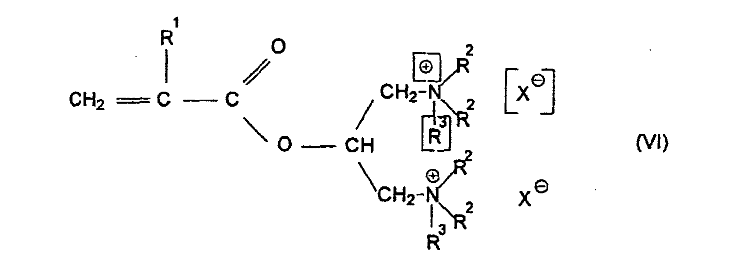 in which:
- R¹ represents H or -CH₃;
- R² represents -CH₃; -C₂H₅ or -C₃H₇; and
- the compound (VI) is optionally quaternized on one of the nitrogens, which is symbolized by the fact that the R³, X⁻ and ⁺ entities associated with this nitrogen are between square brackets;
- R³ represents -CH₃, -C₂H₅ or -C₃H₇; and
- X⁻ represents Cl⁻ or CH₃OSO₃⁻; and
- when the compound (VI) is quaternized on both nitrogens, the two X⁻ entities can be identical or different and the two R³ entities can be identical or different; and
(6) from 0 to 50 parts by moles of at least one anionic monomer chosen from carboxylic acids comprising ethylenic unsaturation, sulphonic acids comprising ethylenic unsaturation, sulphuric acids comprising ethylenic unsaturation and the derivatives of these acids.

2. Aqueous dispersion according to Claim 1, **characterized in that** the compound (I) is that represented by the formula (Ia):

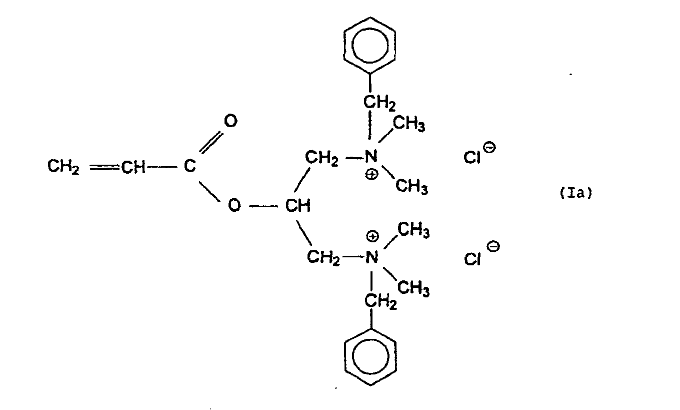

3. Aqueous dispersion according to either of Claims 1 and 2, **characterized in that** it comprises, per 100 parts by weight:
(A) from 10 to 50 parts by weight of dispersed copolymer based on the composition of the monomers (1) to (6) as defined in either of Claims 1 and 2;
(B) from 0.5 to 25 parts by weight of at least one dispersing (co)polymer; and
(C) from 10 to 45 parts by weight of at least one inorganic salt such that the aqueous solution of the said salt dissolves the dispersing (co)polymer without dissolving the dispersed copolymer formed during polymerization,
the remainder being composed of water.

4. Aqueous dispersion according to Claim 3, **characterized in that** it comprises:
(A) from 15 to 30 parts by weight of the dispersed copolymer;
(B) from 1 to 10 parts by weight of the dispersing (co)polymer or (co)polymers; and
(C) from 21.5 to 34 parts by weight of the inorganic salt or salts,
the remainder being composed of water.

5. Dispersion according to either of Claims 3 and 4, **characterized in that** the dispersing (co)polymer or (co)polymers (B) are chosen from cationic, amphoteric or nonionic (co)polymers with a molecular mass of less than 600 000, soluble or partially soluble in a saline aqueous medium.

6. Dispersion according to Claim 5, **characterized in that** the dispersing (co)polymer or (co)polymers (B) are chosen from:
• poly(diallyldimethylammonium chloride);
• poly(acryloyloxyethyltrimethylammonium chloride);
• copolymers based on diallyldimethylammonium chloride or on acryloyloxyethyltrimethylammonium chloride;
• styrene-maleic anhydride copolymers which are imidized and quaternized by an alkyl chloride or benzyl chloride or by an acid;
• poly(acrylamidopropyltrimethylammonium chloride);
• polyacrylamide;
• poly(vinyl alcohol); and
• poly(ethylene oxide).

7. Dispersion according to Claim 6, **characterized in that** the dispersing (co)polymer or (co)polymers are chosen from:
- cationic polymers based on styrene, on acryloyloxyethyltrimethylammonium chloride and on polyethoxy methacrylate, with or without a hydrophobic group, the latter being either the triphenylstyryl group or an alkyl chain;
- amphoteric polymers based on styrene, on acryloyloxyethyltrimethylammonium chloride, on methacrylic acid and on polyethoxy methacrylate, with or without a hydrophobic group, the latter being either the triphenylstyryl group or an alkyl chain;
- cationic polymers based on styrene, on diallyldimethylammonium chloride and on polyethoxy methacrylate, with or without a hydrophobic group, the latter being either the triphenylstyryl group or an alkyl chain;
- cationic polymers based on styrene, on acryloyloxyethyltrimethylammonium chloride and on alkyl (meth)acrylate comprising a long C₁₂-C₃₀ chain,
the polyethoxy methacrylate with a triphenylstyryl group being represented by the formula (VII): 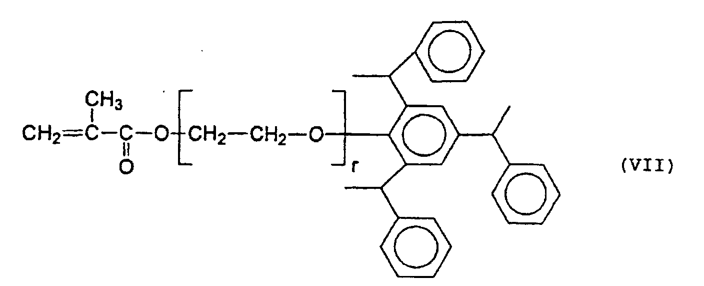 with r an integer from 1 to 60.

8. Dispersion according to one of Claims 1 to 7, **characterized in that** the salt or salts (C) are chosen from ammonium sulphate, sodium sulphate, aluminum sulphate, sodium chloride, sodium dihydrogenphosphate and sodium hydrogenphosphate, it being possible for these kosmotropic salts to be combined with a chaotropic salt, such as sodium thiocyanate or ammonium thiocyanate.

9. Process for the manufacture of an aqueous dispersion as defined in one of Claims 1 to 8, **characterized in that** the radical polymerization in a saline aqueous medium of the monomer or monomers (1) to (6) as defined in either of Claims 1 and 2 is carried out in the presence of at least one polymer dispersant (B) as defined in Claim 3 and of at least one inorganic salt (C) as defined in Claim 3.

10. Process according to Claim 10, **characterized in that** the aqueous dispersion is prepared by using:
- from 10 to 50 parts by weight of the composition of the water-soluble monomers (1) to (6);
- from 0.5 to 25 parts by weight of the polymer dispersant or dispersants (B); and
- from 10 to 45 parts by weight of the salt or salts (C),
these parts being with respect to 100 parts by weight of the reaction mixture composed of water, the dispersing polymer or polymers (B), the salt or salts (C) and the composition of the monomers (1) to (6) .

11. Process according to Claim 10, **characterized in that** the aqueous dispersion is prepared by using:
- from 15 to 30 parts by weight of the composition of the water-soluble monomers (1) to (6);
- from 1 to 10 parts by weight of the polymer dispersant or dispersants (B); and
- from 21.5 to 34 parts by weight of the salt or salts (C),
these parts being with respect to 100 parts by weight of the reaction mixture composed of water, the dispersing polymer or polymers (B), the salt or salts (C) and the composition of the monomers (1) to (6).

12. Process according to one of Claims 9 to 11, **characterized in that** it is carried out at a temperature of -40°C to 160°C.

13. Process according to Claim 12, **characterized in that** it is carried out at a temperature of 30 to 95°C.

14. Use of the dispersion of water-soluble copolymers as defined in one of Claims 1 to 8 or prepared by the process as defined in one of Claims 9 to 13, as flocculating agent for the treatment of waste water; dehydrating agent; agent for retaining fibers and fillers in processes for the manufacture of paper; agent facilitating the cleaning of supports, such as textiles; agent for dispersing fillers; inhibiting agent for the transfer of pigments and dyes onto various supports, such as textiles; and thickener.
